# EUROPÄISCHE PATENTANMELDUNG

(11) **EP 1 243 520 A1**
(43) Veröffentlichungstag der Anmeldung: **25.09.2002**
(21) Anmeldenummer: 01810273.1
(22) Anmeldetag: 19.03.2001
(51) Int. Cl.: B65D 41/34, B26F 1/18, B29C 69/02

(54) **Verfahren und Vorrichtung zum Bearbeiten einer Verschlusskapsel**

(71) Anmelder: OBERBURG ENGINEERING AG, 3414 Oberburg (CH)
(72) Erfinder: Lüdi, Thomas, 3415 Hasle (CH)
(74) Vertreter: Roshardt, Werner Alfred, Dipl.-Phys.

(57) **Zusammenfassung**

Eine im Formpressverfahren hergestellte Verschlusskapsel (1) weist im geformten Zustand - in dieser Zeichnung rechts der Achse (2) dargestellt - einen Boden (3), einen Mantel (4), einen Garantiering (5) und die Rückhaltevorrichtungen (6.1) auf. Durch einen Faltring (11) werden die Rückhaltevorrichtungen (6.2) umgelegt und umgefaltet. Die Verschlusskapsel (1) wird durch ein Innenwerkzeug (12) gestützt, während sie entlang einer Messeranordnung (18) abrollt und dabei die Sollbruchlinie (7) erstellt wird. Die Falt- und Schneidoperation erfolgt auf einem Drehturm.

## Beschreibung

### Technisches Gebiet

Die Erfindung betrifft ein Verfahren zum Bearbeiten einer Verschlusskapsel und eine Vorrichtung mit einer Mehrzahl von Kapselträgern auf einem Drehturm zum Bearbeiten einer Verschlusskapsel.

### Stand der Technik

Verschlusskapseln werden seit längerer Zeit als Verschlüsse von Gefässen oder Flaschen (Verpackungscontainern) verwendet. Neben der Verwendung für Getränkeflaschen und Esswarenverpackungen werden teils auch grössere Verpackungscontainer, z. B. für Reinigungs- oder Düngemittel, mit solchen Verschlüssen versehen.

Solche Verschlusskapseln werden beispielsweise formgepresst (engl. = compression moulded). Dabei werden alle Teile der Verschlusskapsel in einem Formpressvorgang erstellt. An eine Verschlusskapsel werden verschiedene Anforderungen gestellt. Ein erstmaliges Öffnen des Verschlusses muss aus hygienischen und sicherheitstechnischen Gründen erkennbar sein. Dafür weisen die Verschlusskapseln beispielsweise einen Garantiering (engl. = pilfer band) auf, welcher beim erstmaligen Öffnen des Verschlusses am Verpackungscontainer verbleibt oder von der Verschlusskapsel abreisst, so dass eindeutig erkennbar ist, dass der Verschluss bereits einmal geöffnet wurde. Damit der Garantiering von der Verschlusskapsel abtrennbar ist, wird der Bereich zwischen dem Garantiering und der Verschlusskapsel mit beabstandeten Sollbruch-Rippen (engl. = spaced frangible ribs) versehen. Dieser Übergangsbereich muss einerseits derart schwach ausgebildet sein, dass mit einem von Hand erzeugten Drehmoment der Verschluss geöffnet werden kann. Andererseits muss dieser Übergangsbereich so stark sein, dass eine maschinelle Montage der Verschlüsse auch bei hohen Montagegeschwindigkeiten auf den Verpackungscontainern möglich ist, ohne dass bei der Montage der Garantiering beschädigt wird. Es ist bekannt, den Garantiering mit Rückhaltevorrichtungen zu versehen, welche bei der Montage des Verschlusses keinen Widerstand erzeugen und erst beim Öffnen des Verschlusses am Verpackungscontainer der Öffnungsrichtung des Verschlusses entgegenstehen und somit die Abtrennung des Garantierings von der Verschlusskapsel erleichtern.

Aus der US 4,978,017 (McBride) ist beispielsweise bekannt, eine Sollbruchlinie zwischen der eigentlichen Verschlusskapsel und dem Garantiering mit einem aussenseitig angreifenden Kerbmesser zu erstellen. Dabei werden die sogenannten Rippen erstellt, welche den Garantiering halten, bis die Verschlusskappe das erste Mal geöffnet wird.

Die genannten Rückhaltevorrichtungen werden vorzugsweise im Formpressvorgang gleichzeitig mit den übrigen Teilen der Verschlusskapsel erstellt.

### Darstellung der Erfindung

Aufgabe der Erfindung ist es, ein Verfahren und eine Vorrichtung anzugeben, bei denen auf einem Drehturm der Garantiering gefertigt wird.

Die Lösung der Aufgabe ist durch die Merkmale des Anspruchs 1 definiert. Gemäss der Erfindung wird bei der Bearbeitung einer Verschlusskapsel eine Faltoperation auf einem Drehturm durchgeführt, bei welcher die von einem Boden der Verschlusskapsel wegragende Rückhaltevorrichtung eines Garantierings gegen den Boden hin umgefaltet wird. Bei einer unmittelbar nachfolgenden Schneidoperation auf dem Drehturm mit einer Schneideinrichtung wird entlang einer mantelseitig verlaufenden Linie an der Verschlusskapsel eine Sollbruchlinie (engl. = score line) angebracht, so dass der Garantiering der Verschlusskapsel abtrennbar wird. Die Schneidoperation kann der Faltoperation vorgezogen werden.

Da die Arbeitsschritte des Faltens und des Schneidens auf ein und demselben Drehturm ausgeführt werden, ist neben der Präzision, welche bei Arbeitsvorgängen auf einem Drehturm erreicht werden, auch die Produktionszeit bei der Herstellung solcher Verschlusskapseln wesentlich kürzer, als es im Stand der Technik der Fall ist. Weiter können mit diesem Verfahren einfache Rückhaltevorrichtungen vorgesehen werden.

Mit einem Faltring werden die Rückhaltevorrichtungen des Garantierings nach innen gegen den Boden der Verschlusskapsel umgefaltet. Dieser Vorgang erfolgt vorzugsweise auf dem Drehturm, auf welchem auch die Schneidoperation durchgeführt wird. Von Vorteil ist die Kombination aller Verfahrensschritte dieser Maschine in ein und derselben Arbeitsstation des Drehturms. Die Rückhaltevorrichtungen sind beispielsweise einzelne, in der Art von Widerhaken ausgebildete Laschen. Weiter kann die Rückhaltevorrichtung auch ein umlaufender Ring sein, welcher als Ganzes gegen den Boden der Verschlusskapsel umgefaltet wird. Es ist weiter denkbar, dass der gesamte Garantiering umgefaltet wird und so beispielsweise die Rippen derart schwächt, dass die Verschlusskapsel leicht von dem Verpackungscontainer entfernt werden kann.

Vorzugsweise erfolgt die Schneidoperation unmittelbar nach der Faltoperation. Je nach Art der Verschlusskapsel kann auch der Schneidvorgang dem Faltvorgang vorangestellt werden. Die Schneideinrichtung, welche zwischen der Verschlusskapsel und dem Garantiering eine Sollbruchlinie erzeugt, greift vorzugsweise aussenseitig am Mantel der Verschlusskapsel an. Die Sollbruchlinie kann vollständig den Mantel der Verschlusskapsel umlaufen, aber auch nur abschnittsweise an diesem angeordnet sein. Vorzugsweise weist die Schneidvorrichtung ein Kerbmesser auf. Damit werden Rippen hergestellt, welche den Garantiering bis zum erstmaligen Öffnen halten und gleichzeitig erlauben, den Verschluss mit einem von Hand anwendbaren Drehmoment zu öffnen. Dabei wird der Garantiering beispielsweise ganz von der Verschlusskapsel abgetrennt und verbleibt am Verpackungscontainer. In einer anderen Ausführungsform kann die Sollbruchlinie auch derart ausgebildet sein, dass nur einzelne Rippen reissen und der Garantiering in einzelnen Teilen nach dem Öffnen des Verschlusses an der Verschlusskapsel verbleibt.

In einer vorteilhaften Ausführung des Verfahrens findet die Faltoperation einerseits und die Schneidoperation anderseits auf zwei verschiedenen Ebenen (d. h. unterschiedlichen Höhenniveaus) bezüglich des Drehturms statt. Dadurch können die je nach Operation benötigten Werkzeuge in einer bevorzugten Art aneinander vorbeigeführt werden. Dies wirkt sich insbesondere in einem geringeren Platzbedarf der Maschine aus. Je nach Platzverhältnissen oder Konstruktion der Maschine können die Operationen auch auf einer Ebene durchgeführt werden.

Vorzugsweise wird bei diesem Verfahren die Verschlusskapsel bei der Schneidoperation an der Schneideinrichtung abgerollt. Für ein einwandfreies Funktionieren des Verschlusses ist eine hohe Präzision der erstellten Sollbruchlinie von Vorteil. Je genauer diese Sollbruchlinie erstellt wurde, desto besser lässt sich der Verschluss öffnen. Gleichzeitig wird bei einer hohen Präzision der Sollbruchlinie die Sicherheit gewährleistet, dass der Verschluss nicht unbeabsichtigt geöffnet werden kann. Damit die verlangte Präzision erreicht wird, weist das Messersegment der Schneideinrichtung vorzugsweise eine Länge auf, welche annähernd bis genau der Länge des Aussenumfangs der Verschlusskapsel entspricht. Für die Schneidoperation wird beispielsweise ein Kerbmesser (engl. = scoring knife) verwendet. Damit lässt sich entsprechend der gewünschten Ausführung in einer einfachen Art die Sollbruchlinie erstellen. Durch die Anzahl und Grösse der vorstehenden Schneiden des Kerbmessers wird die Länge in Umfangsrichtung der Durchdringungen, beziehungsweise die Länge der Rippen in Umfangsrichtung bestimmt. Diese Längen können gleichmässig lang oder alternierend lang und kurz ausgebildet sein. Es können je nach Ausführung auch beliebige Abfolgen, wie beispielsweise kurz-kurz-lang-kurz-kurz oder dergleichen hergestellt werden. Die Durchdringungen müssen nicht unbedingt nur als Schlitze zwischen den Rippen ausgebildet sein. Weiter können auch Durchbruchsöffnungen vorgesehen werden. Die angeordneten Rippen beziehungsweise dünnen Zwischenwände müssen nur derart ausgebildet sein, dass sie beim Montieren eine genügende Festigkeit aufweisen und bei einem bewussten Öffnen des Verschlusses schnell brechen.

Dieses Verfahren lässt sich auch auf Verschlusskapseln mit einem gegenüber von Verschlusskapseln für Getränkeflaschen grösseren Durchmesser anwenden. In der Folge höherer Anforderungen, wie beispielsweise die Stabilität des Verschlusses, weisen solche Verschlusskapseln grössere Wandstärken auf, als es beispielsweise bei Getränkeflaschen der Fall ist. Damit auch bei diesen Verschlusskapseln eine Sollbruchlinie erstellt werden kann, welche ein Abtrennen des Garantierings von der Verschlusskapsel mit einem von Hand erzeugten Drehmoment ermöglicht, wird die Schneidoperation vorzugsweise in zwei Teilschritten ausgeführt. In einem ersten Schritt wird die Wandstärke der Verschlusskapsel entlang der Sollbruchlinie geschwächt. In einem zweiten Schritt werden gezielt örtlich verteilte Trennschritte angebracht. Durch einen solchen Verfahrensschritt können einerseits dickwandige Verschlusskapseln bearbeitet und gleichzeitig die Funktionsfähigkeit beim Öffnen eines solchen Verschlusses gewährleistet werden.

Bei allen Arbeitsvorgängen ist die Verschlusskapsel vorzugsweise zentrisch auf einem Kapselträger ausgerichtet. In dieser Position werden die Verschlusskapseln mit einem Führungsschlitten, der eine vorzugsweise prismatische Frontpartie aufweist, und einer ortsfesten Aussenführung gehalten. Bei dem Schneidvorgang wird die Verschlusskapsel bezüglich dieses Kapselträgers in eine exzentrische Position gebracht. D. h. die Achse des Werkzeugs und der Verschlusskapsel sind gegeneinander verschoben.

Zu diesem Zweck wird vorzugsweise ein Führungselement, beispielsweise ein Führungsdorn vor der Schneidoperation in die Verschlusskapsel gefahren. Dieses Führungselement stützt die Verschlusskapsel während der nachfolgenden Schneidoperation. Die Frontpartie des Führungsschlittens ist während der Schneidoperation derart zurückgezogen, dass kein Kontakt mehr zwischen der Frontpartie und der Verschlusskapsel besteht. In einer bevorzugten Ausführungsform wird das Führungselement während der Schneidoperation rotiert. Damit wird der Abrollvorgang der Verschlusskapsel an der Schneideinrichtung wesentlich unterstützt, was zu einer erhöhten Präzision der erstellten Sollbruchlinie gegenüber einer Sollbruchlinie, wie sie bei einem einfachen Abrollen der Verschlusskapsel an der Schneideinrichtung ohne Führungselement entstehen würde, führt. In einer Variante dazu kann das Führungselement auch derart ausgebildet sein, dass es passiv mit der Verschlusskapsel mitdreht. Dabei könnte der Führungsdorn einen frei und leicht drehbaren Kopf aufweisen. Beispielsweise umfasst ein solcher Kopf einen über Kugellager gehaltenen Führungsring. Es könnten auch mehrere solcher Führungsringe angeordnet werden.

Die bevorzugte Vorrichtung zum Bearbeiten der Verschlusskapseln umfasst eine Mehrzahl von Kapselträgern auf einem Drehturm. Die Kapselträger sind vorzugsweise in einer drehenden Trommel angeordnet, welche um eine vertikale Achse des Drehturms rotiert. Jedem Kapselträger ist eine Faltvorrichtung zugeordnet, welche die vom Boden der Verschlusskapsel wegragende Rückhaltevorrichtung des Garantierings gegen den Boden hin umfaltet. Weiter ist mindestens eine Schneideinrichtung zum Anbringen einer mantelseitigen Sollbruchlinie angeordnet, so dass der Garantiering von der Verschlusskapsel abtrennbar ist.

Auf der drehenden Trommel sind entsprechend der Anzahl der Kapselträger Führungsschlitten vorgesehen. Diese weisen vorzugsweise eine prismatische Frontpartie auf, welche beispielsweise mit einem hydraulischen oder pneumatischen Zylinder in Richtung des Zentrums zurückgezogen oder radial nach aussen vorgefahren werden kann. Eine bevorzugte Ausgestaltung der prismatischen Frontpartie stellt im Grundriss gesehen ein offenes Dreieck dar, wobei die geschlossene Spitze des Dreiecks in Richtung des Zylinders angeordnet ist. Die Frontpartie kann auch die Ausgestaltung eines Kreisbogens haben, wobei die offene Seite des Kreisbogens vom Zylinder weg ausgerichtet ist. Ein solcher Kreisbogen sollte in den Abmessungen nicht zu eng gewählt werden, damit mit ein und demselben Drehturm verschiedene Durchmesser von Verschlusskapseln bearbeitet werden können.

Als Art der Steuerung der Vorrichtung bieten sich die bekannten Systeme an. Wenn die Steuerung des gesamten Drehturms kurvengesteuert erfolgt, werden die einzelnen beweglichen Teile über einen Mechanismus hin- und herbewegt, welcher entlang einer vorzugsweise gekrümmten Schiene beziehungsweise entlang einer vorbestimmten mechanischen Kurvenbahn verläuft. Vorzugsweise werden sämtliche Bewegungen der Vorrichtungen kurvengesteuert. Dabei können mehrere Steuerungen auch zu einer Steuerung zusammengefasst werden. Aus unterhaltstechnischen Gründen sind jedoch mehrere aufeinander abgestimmte, jedoch mechanisch weitgehend unabhängige Steuerungen für die einzelnen Bewegungsvorgänge bevorzugt.

Neben der bevorzugten Kurvensteuerung kann die Steuerung beispielsweise auch druckgesteuert erfolgen. In einer solchen Ausführung kann beispielsweise der Führungsschlitten mit einer Drucksteuerung versehen werden. Ein Sensor misst dabei den Druck auf die Frontpartie des Führungsschlittens. Sobald der Druck auf die Frontpartie so zunimmt, dass sich beispielsweise die Verschlusskapsel nicht mehr in der gewünschten Weise entlang einer der feststehenden Aussenführungen transportieren lässt, wird die Frontpartie soweit zurückgezogen, dass sich die Verschlusskapsel wieder in der gewünschten Art transportieren lässt. Die Steuerung kann auch pneumatisch oder hydraulisch erfolgen.

In einer bevorzugten Ausführung umfasst die Faltvorrichtung ein ringartiges Element. Dieses ringartige Element ist vorzugsweise aus einem Stück gefertigt. In einer Variante dazu besteht die Faltvorrichtung aus mehreren Fingern, welche wie das ringartige Element in die Verschlusskapsel eindringen und so die Rückhaltevorrichtungen, welche nach dem Formpressvorgang vom Boden der Verschlusskapsel wegragen, zum Boden hin zuerst umbiegen und anschliessend umfalten. Dazu weist das verwendete Element der Faltvorrichtung vorzugsweise eine konische Aussenfläche auf, wobei die Ausrichtung, d. h. die Verjüngung des Konusses, in Richtung des Bodens der Verschlusskapsel verläuft. Nicht die ganze Mantelfläche des Elements muss mit einer konischen Aussenfläche versehen sein. Vorzugsweise ist die konische Aussenfläche nur auf halber Höhe des Elements angeordnet. Das Element der Faltvorrichtung ist bevorzugt relativ zum Kapselträger in einer axialen Richtung verfahrbar.

Die Schneideinrichtung umfasst eine bezüglich des Drehturms ortsfeste Messeranordnung. An dieser werden die Kapselträger vorbeigeführt. Vorzugsweise handelt es sich bei der Messeranordnung um Messersegmente, welche annähernd im Aussenradius der um eine vertikale Achse drehenden Trommel des Drehturms angeordnet sind. Die zu schneidenden Verschlusskapseln werden entlang der Messeranordnung abgerollt. Die gesamte horizontale Länge der Messeranordnung entspricht annähernd der Länge des Aussenumfangs der Verschlusskapsel. Die einzelnen Messersegmente weisen eine Länge auf, welche der horizontalen Länge der Durchdringungen entspricht, welche die Sollbruchlinie aufweisen soll. Die Länge zwischen den Messersegmenten ergibt die horizontale Länge der Rippen, welche den Garantiering bis zum erstmaligen Öffnen an der Verschlusskapsel halten.

Als Schneideinrichtung kann auch ein drehendes Messerblatt oder ein drehender Schneidring verwendet werden. Dabei kann jedem Kapselträger eine solche Schneideinrichtung zugeordnet sein. Zum Schneiden der Sollbruchlinie wird die drehende Schneideinrichtung mit der Verschlusskapsel in Kontakt gebracht, wobei die Schneideinrichtung und die Verschlusskapsel vorzugsweise aneinander abrollen.

In einer bevorzugten Ausführungsform ist jedem Kapselträger ein Führungselement zugeordnet, welches durch Betätigungsmittel während der Schneidoperation in die Verschlusskapsel gefahren werden kann. Das Führungselement ist beispielsweise relativ zum Kapselträger in einer axialen Richtung verfahrbar. Bevorzugt kann das Führungselement rotiert werden, wodurch das Abrollen der Verschlusskapsel an der Schneideinrichtung unterstützt wird. Das Führungselement, beispielsweise ein Führungsdorn, stützt die Verschlusskapsel, insbesondere beim Abrollen an der Schneideinrichtung. Damit das Führungselement eingefahren, beziehungsweise wieder aus der Verschlusskapsel herausgefahren werden kann, ohne dass die Verschlusskapsel beschädigt wird beziehungsweise an dem Führungselement hängen bleibt, ist der Aussendurchmesser des Führungselements vorzugsweise kleiner als der Innendurchmesser der Verschlusskapsel ausgebildet.

In einer Variante dazu kann beispielsweise der Faltring die Funktion des Führungselements übernehmen. Der Faltring kann dazu mit einem Kugellager versehen sein und wird vorzugsweise während der Schneidoperation rotiert. Damit würde eine exzentrische Ausrichtung der Verschlusskapsel entfallen, da der Faltring bevorzugt zentrisch bezüglich der Werkzeugachse ausgerichtet ist.

Um den Abrollvorgang der Verschlusskapsel an der Schneideinrichtung zu unterstützen, wird ein bezüglich des Drehturms ortsfestes Positioniermittel vorgesehen, welches die Verschlusskapsel während der Schneidoperation in eine exzentrische Position des Kapselträgers bringt. Vorzugsweise wird als ortsfestes Positioniermittel die Schneideinrichtung verwendet. Dabei ist diese radial in Richtung des Zentrums des Drehturms nach innen versetzt angeordnet. Im Zusammenspiel des Führungselements und des Positioniermittels wird das einwandfreie Abrollen der Verschlusskapsel an der Schneideinrichtung verbessert, was zu einer hohen Präzision der dabei erstellten Sollbruchlinie führt.

Damit die Verschlusskapsel einfach vom Führungselement abgestreift werden kann, ist ein relativ zu diesem in axialer Richtung verfahrbares Element vorgesehen. Vorzugsweise ist das Abstreifelement ein in dem Führungselement angeordneter Stössel. Als Variante dazu kann ein ringartiges Element das Führungselement umfassen und durch eine Bewegung in Richtung der Verschlusskapsel diese vom Führungselement abstreifen. Neben einer einzelnen Bewegung des Abstreifelements kann dieses auch in Zusammenhang mit dem Führungselement bewegt werden. Vorzugsweise sind die Bewegungen des Führungselements und des Abstreifelements gegenläufig, d. h. auf eine Achse bezogen gegeneinander gerichtet. Diese Kombination der Bewegungen der beiden Elemente kann synchron oder auch zeitlich versetzt erfolgen.

Das Abstreifelement kann unabhängig (d. h. als eigenständige Vorrichtung) vom Führungselement ausgebildet sein.

Insbesondere bei Verschlusskapseln mit grossen Wandstärken des Mantels, wie sie beispielsweise bei Grossverpackungen zur Anwendung kommen, kann die Sollbruchlinie nur beschränkt in einem Arbeitsschritt und in der verlangten Präzision erstellt werden. Um dieses Problem zu umgehen, sind zwei Schneideinrichtungen vorgesehen. In einem ersten Schritt wird die Wandstärke der Verschlusskapsel vorzugsweise durch einen kontinuierlichen Schnitt geschwächt. Dazu wird vorzugsweise eine durchgehende Schneide angeordnet, welche eine Länge aufweist, die der Länge des Aussenumfangs der Verschlusskapsel entspricht. Die Wandstärke der Verschlusskapsel muss derart geschwächt werden, dass die verbleibende Wandstärke den Anforderungen genügt. In einem zweiten Schritt, vorzugsweise direkt anschliessend an die erste durchgehende Schneide, wird wie bei der bisher beschriebenen Vorrichtung ein Abschnitt mit Messersegmenten vorgesehen, welche die Sollbruchlinie erstellen. Auch dieser Abschnitt weist zumindest eine Länge auf, welche dem Aussenumfang der Verschlusskapsel entspricht.

Vorzugsweise finden die einzelnen Bearbeitungsschritte auf verschiedenen Ebenen statt. Dadurch wird die Steuerung der einzelnen Werkzeuge beziehungsweise Vorrichtung vereinfacht, da die verschiedenen Werkzeuge einfach aneinander vorbeigeführt werden können. Die Kapselzuführung erfolgt beispielsweise auf einer ersten Ebene, welche vorzugsweise mit der Arbeitsebene der drehenden Trommel des Drehturms übereinstimmt. Auf einer zweiten Ebene ist die Faltvorrichtung angeordnet. Die Schneideinrichtung ist auf einer dritten Ebene vorgesehen. In einer Variante dazu kann die Schneideinrichtung auf einer zweiten Ebene und die Faltvorrichtung auf einer dritten Ebene angeordnet sein. Weiter können die Faltvorrichtung und die Schneideinrichtung auch beide auf einer Ebene zu liegen kommen, wobei bevorzugt die gemeinsame Ebene nicht mit der ersten Ebene übereinstimmt. Die Verschlusskapsel wird mit einer Hubvorrichtung von der ersten in die zweite bzw. weitere Ebene gebracht und bevorzugt auch wieder mit einer solchen Hubvorrichtung in die erste Ebene zurückgebracht. Vorzugsweise ist die Hubvorrichtung mit dem Kapselträger kombiniert. Da vorzugsweise der Kapselträger, das Führungselement und das Abstreifelement relativ in axialer Richtung zueinander verfahrbar sind, können die einzelnen Bearbeitungsschritte in beliebiger Form kombiniert werden. Als Steuerung bieten sich kurvengesteuerte Bewegungsabläufe an.

Die Schneidoperation kann der Faltoperation vorgezogen werden. Je nach Ausführungsform der Verschlusskapsel kann dies zu Vorteilen im Arbeitsablauf und beim fertig erstellten Produkt führen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Einen schematischen Schnitt durch eine Verschlusskapsel, einerseits mit vom Boden der Verschlusskapsel wegragenden Rückhaltevorrichtungen und andererseits mit umgefalteten Rückhaltevorrichtungen;
- Fig. 2a-f: schematische Schnitte einzelner erfindungsgemässer Verfahrensschritte; und
- Fig. 3: eine schematische Draufsicht auf eine drehende Trommel eines erfindungsgemässen Drehturms.

Grundsätzlich sind in den Figuren gleiche Teile mit gleichen Bezugszeichen versehen.

### Wege zur Ausführung der Erfindung

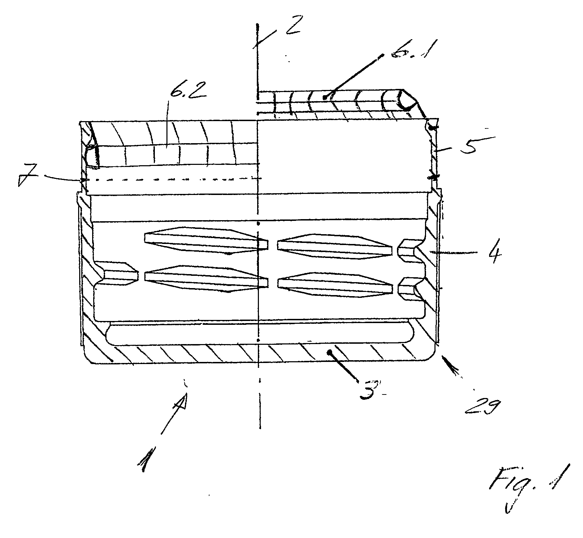

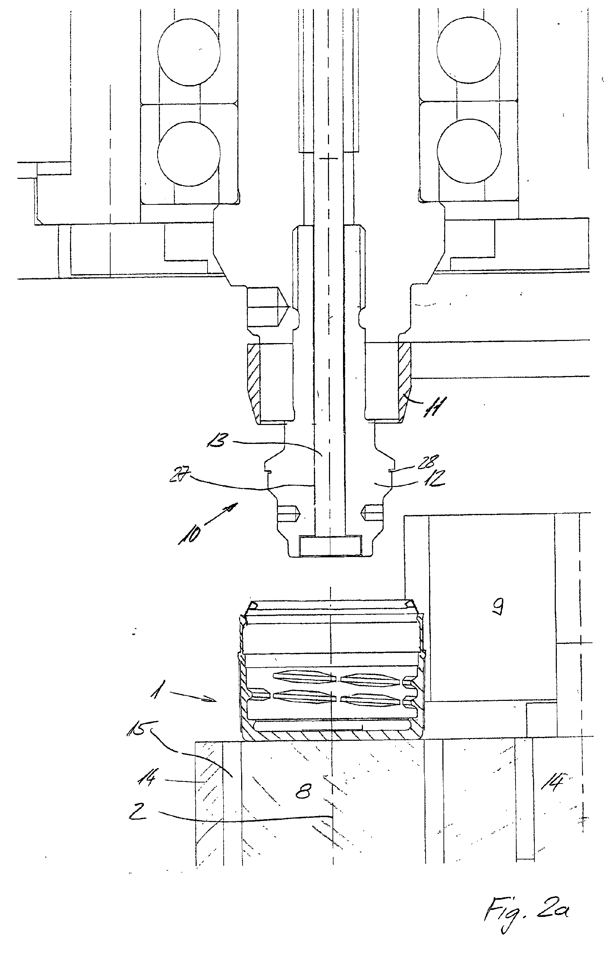

Figur 1 zeigt einen schematischen Schnitt durch eine Verschlusskapsel 1, einerseits mit vom Boden 3 der Verschlusskapsel 1 wegragenden Rückhaltevorrichtungen 6.1 und andererseits mit umgefalteten Rückhaltevorrichtungen 6.2. Die Verschlusskapsel 1 weist einen Drehverschluss 29, einen Garantiering 5 und die Rückhaltevorrichtungen 6.1 bzw. 6.2 auf. Der Drehverschluss 29 umfasst seinerseits einen Boden 3 und den Mantel 4. Die Mittelachse 2 teilt die Verschlusskapsel darstellerisch einerseits in den Zustand direkt nach dem Formpressvorgang - hier rechts, bezogen auf diese Darstellung, von der Mittelachse 2 gezeigt - und andererseits in den Zustand, bei dem die Rückhaltevorrichtungen 6.2 umgefaltet sind - hier links, bezogen auf diese Darstellung, von der Mittelachse 2 gezeigt. Weiter erkennt man die Sollbruchlinie 7, welche die Trennung des Drehverschlusses 29 vom Garantiering 5 ermöglicht.

In den Figuren 2a bis 2f sind schematische Schnitte einzelner erfindungsgemässer Verfahrensschritte gezeigt. Die Maschine, welche die Durchführung des erfindungsgemässen Verfahrens erlaubt, wird als Mehrspindel-Falt- und Schneidemaschine (MFSM) bezeichnet. Sie ist als eine Folgemaschine zu einer Formteilpresse (engl. = compression moulding machine) konzipiert und verarbeitet die formgepressten Kunststoffverschlüsse weiter. In den Figuren 2a bis 2f wird nur ein Ausschnitt einer solchen MFSM gezeigt. Sämtliche Bezeichnungen, wie oben, unten links, rechts und dergleichen, beziehen sich auf die Zeichnungen, wie sie dargestellt ist.

Figur 2a zeigt die Ladestellung der Vorrichtung, nachdem eine Verschlusskapsel 1 beispielsweise mit einem horizontal angeordneten Ladestern oder einer anderen Ladevorrichtung an die MFSM abgegeben wurde. Der gezeigte Ausschnitt der Vorrichtung umfasst im Wesentlichen einen Andrücker 8 (auch Kapselträger genannt), einen Führungsschlitten 9 sowie ein Werkzeug 10. Dieses Werkzeug 10 umfasst im Besonderen einen Faltring 11, ein Innenwerkzeug 12 und einen Zentralauswerfer 13, welche vorzugsweise auf einer Achse angeordnet sind. Der Faltring 11 weist in einer bevorzugten Ausführung eine ringartige Ausgestaltung oder anders ausgedrückt die Form eines Kreiszylinders mit einem Querschnitt eines Kreisrings auf. Auf der dem Boden 3 der Verschlusskapsel 1 zugewandten Seite ist der Faltring 11 leicht konisch ausgestaltet, wobei die imaginäre Spitze des Konusses gegen den Boden 3 der Verschlusskapsel 1 gerichtet ist.

Der Andrücker 8 ist vorzugsweise in einer Ausnehmung 15 einer drehenden Trommel 14 - auch Drehtisch genannt - des Drehturms angeordnet. In der Ladestellung stimmt die Höhe der Oberkante des Andrückers 8 mit der Höhe der Oberkante der drehenden Trommel 14 überein.

Das Innenwerkzeug 12 weist eine grundsätzlich kreiszylindrische Form auf. In axialer Richtung ist es mit einer Ausnehmung 27 zur Aufnahme des Zentralauswerfers 13 versehen. Der Zentralauswerfer 13 kann vollständig im Innenwerkzeug 12 eingefahren werden. Im oberen Bereich der kreiszylindrischen Form des Innenwerkzeugs 12 ist der Querschnitt verstärkt und mit einer radial umlaufenden Nut 28 zur Aufnahme der Messersegmente einer Messeranordnung 18 versehen.

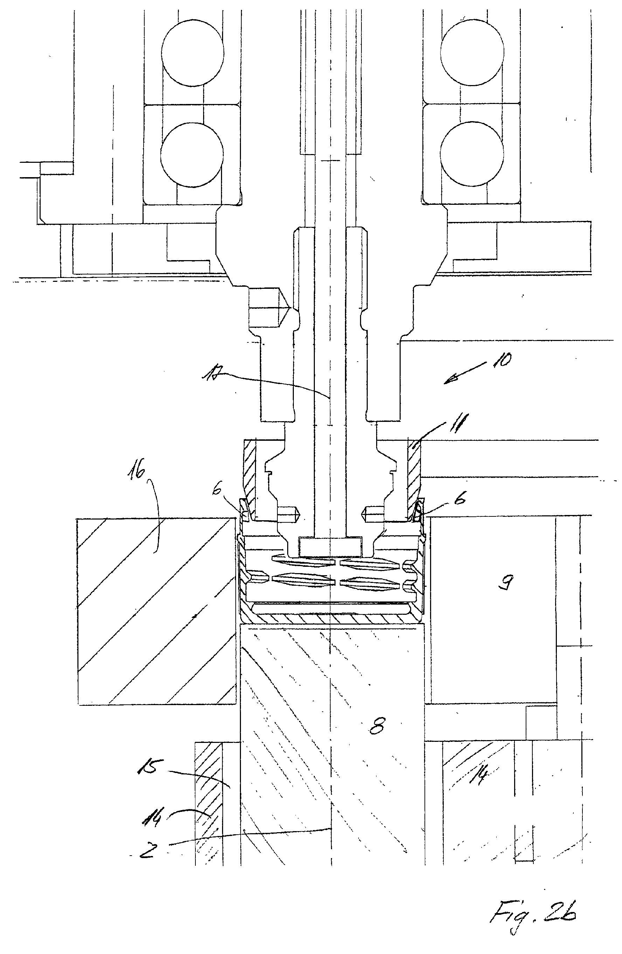

Nachfolgend wird auf Figur 2b Bezug genommen. Die Verschlusskapsel 1 wird vom Andrücker 8 von unten her in einem ersten Hubschritt angehoben. Durch eine vorzugsweise prismenartige Frontpartie, des der Arbeitsstation zugeordneten Führungsschlittens 9, welche die Verschlusskapsel gabelartig stützt, und einer feststehenden Aussenführung 16 wird die Verschlusskapsel 1 bei dieser Hubbewegung an ihrem Umfang geführt. Die Frontpartie des Führungsschlittens 9 kann auch eine kreisbogenartige Ausgestaltung aufweisen, sofern der Radius des Kreisbogens derart gross gewählt wird, dass die grössten mit dieser Maschine bearbeitbaren Durchmesser von Verschlusskapseln sicher geführt werden können. Die feststehende Aussenführung 16 ist entlang der drehbaren Trommel 14 angeordnet. Die Anordnung der feststehenden Aussenführung 16 ist vorzugsweise so ausgerichtet, dass die Mittelachse 2 der Verschlusskapsel 1 mit der Mittelachse 17 des Werkzeugs 10 übereinstimmt. Vorzugsweise wird bei dem Hubvorgang des Andrückers 8 auch der Faltring 11 in eine untere Position abgesenkt, in welcher er bis zum Abschluss des nun folgenden Faltvorgangs verbleibt. Durch die geeignet ausgeformte Kontur des Faltrings 11 werden die Rückhaltevorrichtungen 6 umgelegt und umgefaltet.

Wie in Figur 2c gezeigt ist, fährt vorzugsweise nach Abschluss des Faltvorgangs der Faltring 11 bis zu seiner oberen Endposition zurück, welche bevorzugt oberhalb des Schneidniveaus liegt. In dieser Zeit wird die Verschlusskapsel 1 durch den Andrücker 8 in einem zweiten Hubschritt derart angehoben, dass sie über das Innenwerkzeug 12 geschoben wird. Jeder Arbeitsstation ist vorzugsweise ein Innenwerkzeug 12 zugeordnet. Dabei kann auch das Innenwerkzeug 12 abgesenkt werden, bis die Absenkbewegung durch die Innenseite des Bodens 3 der Verschlusskapsel 1 begrenzt wird.

In Figur 2d ist der Schneidvorgang gezeigt. Durch die Drehbewegung der Trommel 14 wird die Verschlusskapsel 1 mit der feststehenden Messeranordnung 18 in Kontakt gebracht. Dadurch wird die Verschlusskapsel 1 gezwungen, entlang der entsprechend geformten Messeranordnung 18 abzurollen. Durch die Rotation der Verschlusskapsel 1 um die eigene Achse wird im Bereich zwischen dem Drehverschluss 29 und dem Garantiering 5 die Verschlusskapsel 1 mit der gewünschten Sollbruchlinie 7 versehen. Bevorzugt wird für die Messeranordnung 18 ein Kerbmesser (engl. = scoring knife) verwendet.

Während der Schneidoperation wird die Verschlusskapsel 1 vom vorzugsweise rotierenden Innenwerkzeug 12 gestützt. Messersegmente der Messeranordnung 18 durchdringen den Mantel 4 der Verschlusskapsel 1 im Bereich zwischen dem Drehverschluss 29 und dem Garantiering 5. Die Messersegmente werden während der Schneidoperation von der Nut 28 aufgenommen, was zu einer zusätzlichen Stabilisierung der Verschlusskapsel 1 und somit zu einer hohen Präzision der erstellten Sollbruchlinie 7 führt.

Damit die Verschlusskapsel 1 über das Innenwerkzeug 12 hinaufgeschoben und nach der Schneidoperation wieder vom Innenwerkzeug 12 heruntergezogen werden kann, ist der Aussendurchmesser des Innenwerkzeugs 12 kleiner als der Innendurchmesser der Verschlusskapsel 1 ausgebildet. Beim Schneiden der Sollbruchstelle 7 ergibt sich daraus ein so genannter Durchhang A (d. h. eine Achsenverschiebung). Die Mittelachse 2 der Verschlusskapsel 1 wird in Bezug auf die Achse 17 des Innenwerkzeugs 12 radial zur Maschinenmitte hin verschoben.

Nach dem Schneidvorgang, welcher in Figur 2e dargestellt ist, wird die Verschlusskapsel 1 erneut von der Frontpartie des Führungsschlittens 9 erfasst, und mit einer feststehenden Aussenführung 19 werden die Achsen 2 und 17 wieder aufeinander ausgerichtet. D. h. die zuvor beschriebene Achsenverschiebung A zwischen den Achsen 2 und 17 wird wieder aufgehoben. Die nun zentrierte und bearbeitete Verschlusskapsel 1 wird in einem weiteren Schritt vom Innenwerkzeug 12 heruntergezogen, ohne dass die Verschlusskapsel 1 am Innenwerkzeug 12 hängen bleiben kann.

Dieser Vorgang (siehe Figur 2f) wird vom Zentralauswerfer 13 unterstützt, welcher die Verschlusskapsel 1 nach unten drückt. Der Andrücker 8 an der Unterseite der Verschlusskapsel 1 macht die Bewegung des Zentralauswerfers 13 synchron mit. Die Abwärtsbewegung wird beendet, wenn die Oberkante des Andrückers 6 mit der Oberkante der drehenden Trommel 14 übereinstimmt. Die Verschlusskapsel 1 befindet sich nun in der Entladestellung. Die weitere Drehbewegung der Trommel 14 bringt die Verschlusskapsel 1 in den Entladebereich, wo beispielsweise ein eingreifender Finger die Verschlusskapsel 1 in einen Entladestern oder eine andere Entladevorrichtung lenkt.

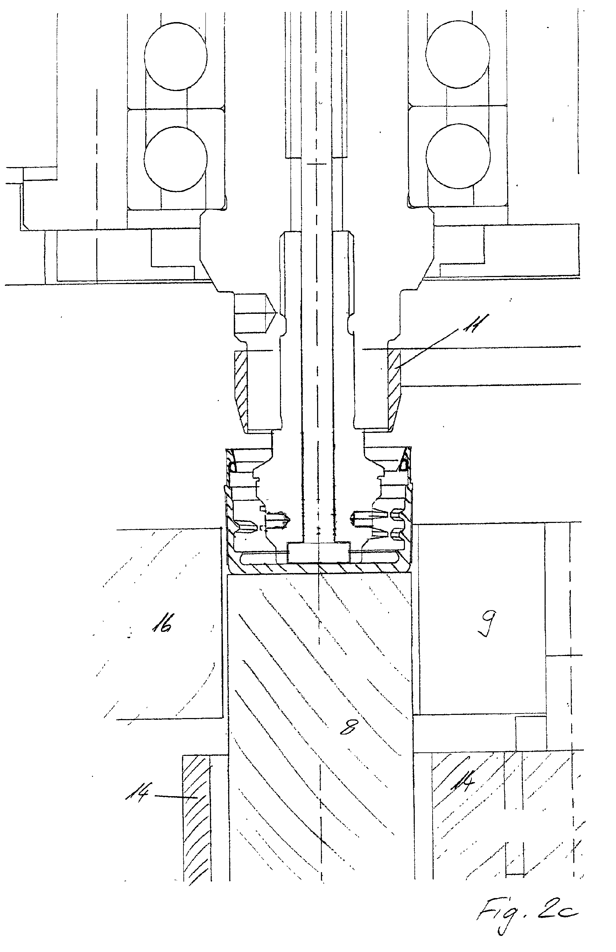

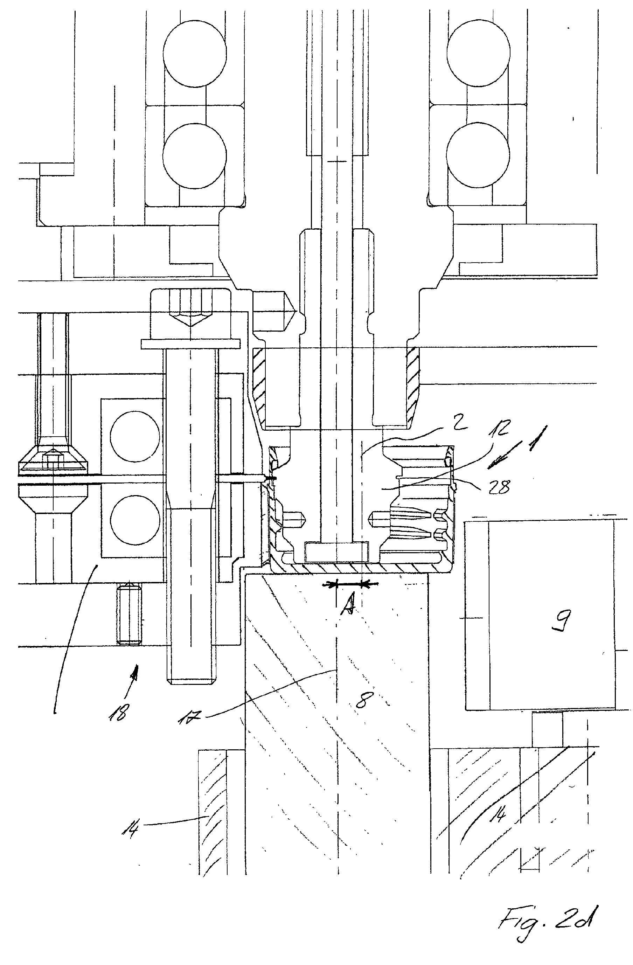

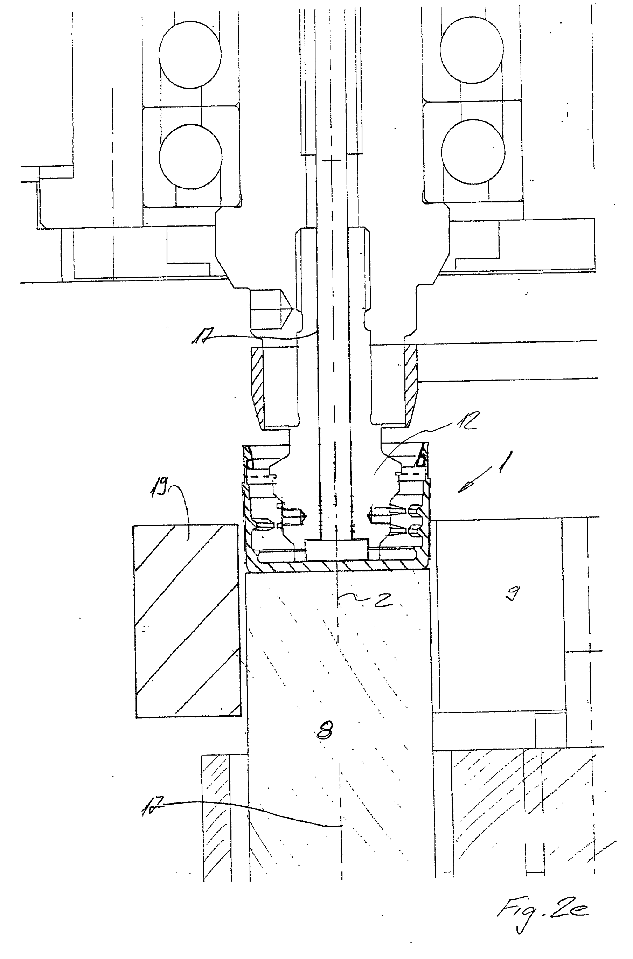

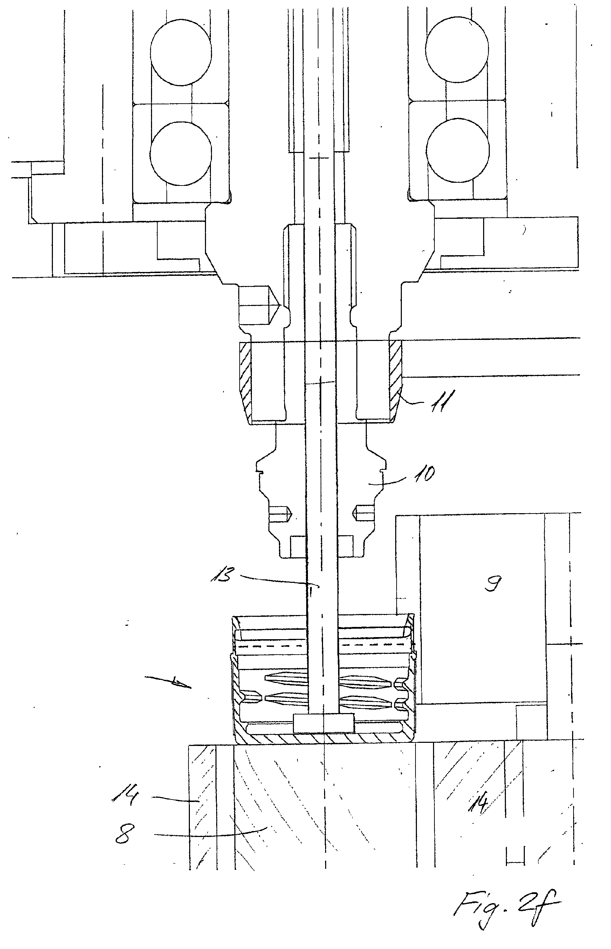

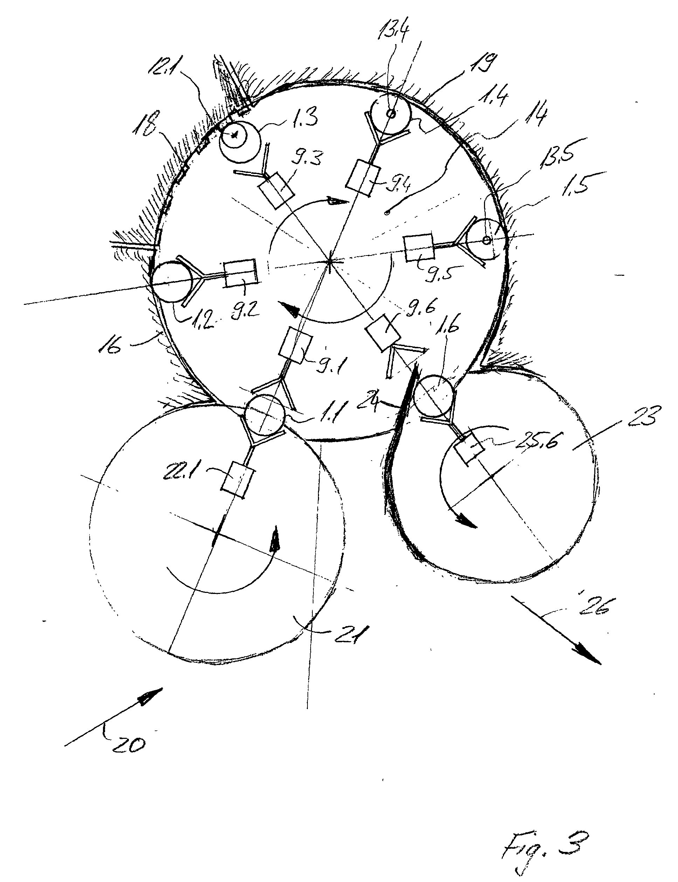

Eine schematische Draufsicht auf die drehende Trommel 14 eines erfindungsgemässen Drehturms ist in Figur 3 gezeigt. Von der Formteilpresse werden die Verschlusskapseln 1 beispielsweise in Pfeilrichtung 20 zum vorzugsweise horizontal angeordneten Ladestern 21 befördert. Auf diesem Ladestern 21 sind beispielsweise mehrere Führungsschlitten - hier schematisch durch den Führungsschlitten 22.1 dargestellt - verteilt. Der Ladestern 21 dreht in diesem Ausführungsbeispiel gegen den Uhrzeigersinn. Die drehende Trommel 14 des Drehturms und der Ladestern 21 können derart angeordnet werden, dass sie sich überschneiden, um eine Übergabe der Verschlusskapseln 1 vom Ladestern 21 zur drehenden Trommel 14 zu ermöglichen. Diese Art der Weiterbeförderung ist beispielhaft. Je nach Mechanismus kann auch der Führungsschlitten z. B. 22.1 ausgefahren werden, wenn sich ein Führungsschlitten z.B. 9.1 gegenüber befindet und somit die Verschlusskapsel 1.1 übergeben wird. Auch eine Überschneidung der Ladesternfläche mit der drehenden Trommel 14 ist nicht zwingend, diese können sich nur an einem Punkt berühren, beziehungsweise knapp beabstandet zueinander sein. Da der Ladestern 21 beispielhaft gegen den Uhrzeigersinn dreht, dreht sich die Trommel 14 entsprechend in diesem Ausführungsbeispiel mit dem Uhrzeigersinn.

Auf der um eine vertikale Achse drehenden Trommel 14 sind beispielhaft sechs Arbeitsstationen angeordnet. Jede dieser Arbeitsstationen umfasst einen Andrücker 8, ein Werkzeug 10 und einen Führungsschlitten 9. Wie bereits ausgeführt wurde, übernimmt die Frontpartie des Führungsschlittens - hier Führungsschlitten 9.1 - die in einer Formteilpresse geformte Verschlusskapsel 1.1. Der Faltvorgang findet im Bereich statt, in welchem sich die Verschlusskapsel 1.2 befindet. Damit die Verschlusskapsel 1.2 für das Eindringen des Faltrings 11 richtig ausgerichtet ist, ist entlang dem Aussenradius der Trommel 14 eine feststehende Aussenführung 16 angeordnet. Der Radius der Kontaktfläche der Aussenführung 16 und der Verschlusskapsel 1 entspricht annähernd dem Aussenradius der drehenden Trommel 14. Während sich die Trommel 14 im Uhrzeigersinn weiterdreht, findet die erste Hubbewegung statt und die Rückhaltevorrichtungen 6 des Garantierings 5 werden umgelegt und umgefaltet. Bevor die Verschlusskapsel 1.2 den Abschnitt mit den Messersegmenten 18 erreicht, hat sich der Faltring 11 bereits zurückgezogen und die Verschlusskapsel 1.2 wird durch das Innenwerkzeug 12 gestützt. Vorzugsweise ist ein Übergang von der feststehenden Aussenführung 16 zu dem Messersegment 18 vorhanden, da dieses radial gesehen zum Zentrum des Drehturms über den Aussenrand der drehenden Trommel 14 vorsteht.

Die Verschlusskapsel 1.3 befindet sich in diesem Ausführungsbeispiel im Bereich der Messeranordnung 18. Die Frontpartie des Führungsschlittens 9.3 ist zurückgezogen, da die Verschlusskapsel 1.3 nun durch das Innenwerkzeug 12.3 gestützt ist. Durch die Drehbewegung der Trommel 14 rollt die Verschlusskapsel 1.3 entlang der Messersegmente der Messeranordnung 18 ab. Die Länge der Messeranordnung 18 entspricht vorzugsweise annähernd der Länge des Aussenumfanges der zu bearbeitenden Verschlusskapsel 1. Vorzugsweise wird für die Messeranordnung 18 ein Kerbmesser verwendet, welches entsprechend der gewünschten Anzahl und Breite der Rippen ausgebildet ist. Durch die Ausgestaltung der Anzahl und Grösse der Kerben der Messersegmente kann einfach auf verschiedene Arten und Durchmesser von Verschlusskapseln Rücksicht genommen werden. Durch die Drehbewegung der Trommel 14 werden die Verschlusskapseln weiterbefördert.

Im Bereich der feststehenden Aussenführung 19 wird, in diesem Beispiel, die Verschlusskapsel 1.4 mit dem Zentralauswerfer 13.4 nach unten gedrückt und vom Innenwerkzeug 12.4 getrennt. Vorzugsweise stimmt auch bei der Aussenführung 19 der Radius der Kontaktfläche der Aussenführung 19 und der Verschlusskapsel 1 annähernd mit dem Aussenradius der drehenden Trommel 14 überein. Vorher wird die Frontpartie des Führungsschlittens 9.4 radial nach aussen vorgefahren, womit die Achsen 2.4 der Verschlusskapsel 1.4 mit der Achse 17.4 des Werkzeugs 10.4 in Übereinstimmung gebracht werden. Im Bereich, in welchem sich die mit der Sollbruchlinie 7.5 versehene und ausgerichtete Verschlusskapsel 1.5 befindet, ist der Andrücker 8.5 soweit zurückgefahren, dass die Oberkante des Andrückers 8.5 mit der Oberkante der drehenden Trommel 14 übereinstimmt. Gehalten wird die Verschlusskapsel 1.5 in diesem Bereich zusätzlich durch den immer noch heruntergefahrenen Zentralauswerfer 13.5.

Die Verschlusskapseln werden durch die vorzugsweise fortlaufende Drehbewegung der Trommel 14 weitertransportiert. In diesem Ausführungsbeispiel ist ein horizontal ausgerichteter Entladestern 23 angeordnet. Wie beim Ladestern 21 kann sich die Fläche des Entladesterns 23 mit der drehenden Trommel 14 überschneiden, berühren oder sie kann beabstandet sein. Im Bereich des Entladesterns 23 ist ein eingreifender Finger 24 angeordnet, welcher den Entladevorgang einleitet. Bevor die Verschlusskapsel 1.6 in den Wirkungsbereich des eingreifenden Fingers 24 kommt, werden die Frontpartie des Führungsschlittens 9.6 und der Zentralauswerfer 13.6 zurückgezogen, damit die Verschlusskapsel 1.6 von diesem Finger 24 übernommen werden kann. Der Entladestern 23 dreht sich in diesem Beispiel vorzugsweise gegen den Uhrzeigersinn. Auch auf dem Entladestern 23 sind vorzugsweise mehrere Führungsschlitten - hier schematisch durch den Führungsschlitten 25.6 dargestellt - angeordnet, welche den Weitertransport der fertig bearbeiteten Verschlusskapseln 1 vornehmen. Anschliessend werden die Verschlusskapseln 1 ausserhalb - beispielsweise in Pfeilrichtung 26 - der Vorrichtungen gesammelt und verpackt.

Der Entladevorgang kann auch nur durch die vorhandenen Führungsschlitten erfolgen. Dazu fährt die Frontpartie des Führungsschlittens 9.6 axial nach aussen derart vor, dass die Verschlusskapsel 1.6 von der Frontpartie des Führungsschlittens 25.6 übernommen werden kann. Es ist auch denkbar, auf den Entladestern 23 zu verzichten. Dazu wird beispielsweise im Bereich des eingreifenden Fingers 24 eine Sammelschale angeordnet, welche die fertig bearbeiteten Verschlusskapseln beispielsweise über ein Rutschensystem (engl. = slide system) wegführt oder in eine Verpackung befördert, beispielsweise einen Sack oder eine Schachtel. Weiter kann auch eine Ausblasvorrichtung im Bereich des Entladens vorgesehen sein. Mit Druckluft können die Verschlusskapseln von der drehenden Trommel 14 in eine Sammelschale oder Verpackung geblasen werden. Diese Druckluftvorrichtung kann beispielsweise durch die Bewegungen der Andrücker 8 im Stil einer Luftpumpe betrieben werden.

Bei Verschlusskapseln 1 mit grösseren Aussendurchmessern, wie sie bei grösseren Verpackungscontainern als beispielsweise bei Getränkeflaschen Anwendung finden, ist der Mantel 4 der Verschlusskapsel 1 beispielsweise aus Stabilitäts- oder Sicherheitsgründen stärker ausgebildet. Um die gewünschte Präzision der Sollbruchlinie 7 zu erreichen, wird diese Sollbruchlinie 7 vorzugsweise in einem zweistufigen Verfahren erstellt. In einer ersten Stufe wird die Wandstärke im Bereich zwischen dem Drehverschluss 29 und dem Garantiering 5 geschwächt. Dazu wird der erste Teil der Messeranordnung 18 mit einer durchgehenden Schneide versehen. Diese Schneide dringt derart tief im Bereich zwischen dem Drehverschluss 29 und dem Garantiering 5 ein, dass mit dem zweiten Teil der Messeranordnung 18 die gewünschten Rippen erzeugt werden können. Der zweite Teil der Messeranordnung 18 ist vorzugsweise entsprechend dem Messersegment, beispielsweise mit einem Kerbmesser, wie beim einstufigen Verfahren ausgebildet. Beide Abschnitte der Messeranordnung 18 weisen jeweils beim zweistufigen Schneidverfahren eine Länge auf, welche der Länge des Aussendurchmessers der Verschlusskapsel entspricht. Dementsprechend sind die Längen der feststehenden Aussenführungen 16 und 19 gegenüber der Ausführung beim einstufigen Verfahren kürzer ausgebildet. Weiter müssen die Abläufe der einzelnen Verfahrensschritte entsprechend der kürzeren Wegstrecke, beispielsweise im Bereich der Aussenführungen 16 und 19 und/oder im Be- und Entladebereich, angepasst werden.

In einer weiteren Variante zu der beschriebenen Ausführung kann das Innenwerkzeug 12 derart ausgestaltet werden, dass anstelle der Nut 28 Messersegmente an dieser Stelle vorgesehen sind. Die Sollbruchlinie 7 würde bei einer solchen Anordnung von innen her erstellt. Der Abschnitt, in welchem bei den bisherigen Ausführungen die Messeranordnung 18 vorgesehen ist, wird durch eine weitere Aussenführung ersetzt. Diese Aussenführung wird vorzugsweise mit einer Nut zur Aufnahme der von innen nach aussen wirkenden Messersegmente versehen. Die Anzahl der Umdrehungen des Innenwerkzeugs 12 und der einzelnen Messersegmente ist bei dieser Variante von der Länge des Innenumfangs der Verschlusskapsel abhängig.

Wie bereits dargelegt wurde, handelt es sich bei der Vorrichtung zur Ausführung des beschriebenen Verfahrens vorzugsweise um einen Drehturm. Bei einem solchen Drehturm und mit diesem im Arbeitsablauf zusammenfunktionierenden Vorrichtungen erfolgen sämtliche Bewegungen gesteuert, wobei kurvengesteuerte Bewegungen bevorzugt sind. Die Kurvenbahnen sind so ausgeführt, dass beispielsweise folgende Bewegungsabläufe resultieren:
- Der Faltring 11 wird nach der Positionierung der Verschlusskapsel 1 auf dem Andrücker 8 in eine untere Position gefahren.
- Der Andrücker 8 wird erst dann hochgefahren, wenn der Faltring 11 seine Bewegung in die untere Position beendet hat. Die Aufwärtsbewegung des Andrückers 8 wird gestoppt, sobald die Rückhaltevorrichtungen 6 des Garantierings 5 umgelegt und umgefaltet sind. Anschliessend wird der Faltring 11 in seine obere Position zurückgezogen, welche vorzugsweise oberhalb des Niveaus der Schneidoperation liegt.
- Der Andrücker 8 wird in einer zweiten Hubbewegung derart hochgeschoben, dass sich die Verschlusskapsel 1 über das Innenwerkzeug 12 schiebt. Die Frontpartie des Führungsschlittens 9 wird zurückgezogen, sobald die Verschlusskapsel sich im Bereich der Messeranordnung 18 befindet.
- Der Zentralauswerfer 13 wird nach Beendigung des Schneidvorgangs nach unten gefahren, wobei sich der Andrücker 8 synchron mit diesem nach unten bewegt. Gleichzeitig wird die Frontpartie des Führungsschlittens 9 vorgefahren, bis die Achse 2 der Verschlusskapsel 1 mit der Achse 17 des Werkzeugs 10 übereinstimmt.
- Der Führungsschlitten 9 wird im Bereich des eingreifenden Fingers gleichzeitig mit dem Zentralauswerfer 13 zurückgezogen, womit die Verschlusskapsel 1 für den Entladevorgang frei ist.

Die beschriebenen Vorgänge müssen aufeinander abgestimmt werden. Je nach maximaler Grösse der zu bearbeitenden Verschlusskapseln oder der Platzverhältnisse, in welchen die Maschine aufgestellt wird, kann die Anzahl der Arbeitsstationen von der beispielhaften Anzahl von sechs Arbeitsstationen angepasst werden. Entsprechend müssen die Steuerungsorgane, beispielsweise die Kurvenbahnen, angepasst werden.

Je nach Ausführung der Verschlusskapsel kann die Schneidoperation der Faltoperation vorgezogen werden. Eine solche Maschine würde entsprechend der umgestalteten Arbeitsabläufe als Mehrspindel-Schneid- und Faltmaschine (MSFM) bezeichnet. Bei einer solchen Maschine kann beispielsweise die Aussenführung 16 mit der Schneideinrichtung 18 ausgetauscht werden. Nach der Übernahme der Verschlusskapsel 1 dringt das Innenwerkzeug 12 in die Verschlusskapsel 1 ein. Die Verschlusskapsel 1 wird bezüglich des Andrückers 8 in eine exzentrische Lage gebracht und die Schneidoperation beginnt. Nach Abschluss der Schneidoperation wird die Verschlusskapsel 1 von der Aussenführung und der Frontpartie des Führungsschlitten wieder in eine bezüglich des Andrückers 8 zentrische Lage gebracht, und der Faltring 11 faltet die Rückhaltevorichtungen 6 um. Dazu wird die Verschlusskapsel bevorzugt auf eine zweite Ebene hochgehoben. Bei dieser Variante kann beispielsweise die Schneidoperation auf der Arbeitsebene der drehenden Trommel 14 ausgeführt werden und somit eine Hubbewegung des Andrückers 8 entfallen.

Zusammenfassend ist festzustellen, dass durch das Verfahren und die Vorrichtung die Produktion von Verschlusskapseln wesentlich vereinfacht ist. Hohe Produktionsgeschwindigkeiten können vollzogen werden mit einer gleichzeitig hohen Präzision der erstellten Sollbruchlinien. Gleichzeitig können einfache Systeme von Rückhaltevorrichtungen derart bearbeitet werden, dass die hohen Ansprüche erfüllbar sind, welche an Verschlusskapseln gestellt werden.

## Patentansprüche

1. Verfahren zum Bearbeiten einer Verschlusskapsel, **dadurch gekennzeichnet, dass** unmittelbar vor oder nach einer Schneidoperation auf einem Drehturm eine Faltoperation durchgeführt wird, bei welcher die von einem Boden (3) der Verschlusskapsel (1) wegragende Rückhaltevorrichtung (6.1) eines Garantierings (5) gegen den Boden (3) hin umgefaltet wird, und dass im Rahmen der Schneidoperation auf dem Drehturm mit einer Schneideinrichtung (18) entlang einer mantelseitig verlaufenden Linie an der Verschlusskapsel (1) eine Sollbruchlinie (7) angebracht wird, so dass der Garantiering (5) der Verschlusskapsel (1) abtrennbar wird.

2. Verfahren nach Anspruch 1, **dadurch gekennzeichnet, dass** die Faltoperation einerseits und die Schneidoperation anderseits auf zwei verschiedenen Ebenen bezüglich des Drehturms durchgeführt werden.

3. Verfahren nach einem der Ansprüche 1 oder 2, **dadurch gekennzeichnet, dass** die Verschlusskapsel (1) bei der Schneidoperation an einer Schneideinrichtung (18) abgerollt wird.

4. Verfahren nach einem der Ansprüche 1 bis 3, **dadurch gekennzeichnet, dass** die Schneidoperation in zwei Teilschritten durchgeführt wird, wobei in einem ersten Schritt eine Wandstärke der Verschlusskapsel (1) entlang der Sollbruchlinie (7) geschwächt wird und in einem zweiten Schritt gezielt örtlich verteilte Trennschnitte angebracht werden.

5. Verfahren nach einem der Ansprüche 1 bis 4, **dadurch gekennzeichnet, dass** die Verschlusskapsel (1) für die Schneidoperation in eine bezüglich eines Kapselträgers (8) der Verschlusskapsel exzentrische Position gebracht wird.

6. Verfahren nach einem der Ansprüche 3 bis 5, **dadurch gekennzeichnet, dass** ein Führungselement, insbesondere ein Führungsdorn (12), vor der Schneidoperation in die Verschlusskapsel (1) gefahren wird und dass das Führungselement während der Schneidoperation rotiert wird, um das Abrollen der Verschlusskapsel (1) an der Schneideinrichtung (18) zu unterstützen.

7. Vorrichtung mit einer Mehrzahl von Kapselträgern auf einem Drehturm zum Bearbeiten einer Verschlusskapsel, **gekennzeichnet durch** eine Faltvorrichtung (11), welche jedem Kapselträger (8) zugeordnet ist, um eine von einem Boden (5) der Verschlusskapsel (1) wegragende Rückhaltevorrichtung (6.1) des Garantierings (5) gegen den Boden (3) hin umzufalten, und mindestens eine Schneideinrichtung (18) zum Anbringen einer mantelseitigen Sollbruchlinie (7), so dass der Garantiering (5) der Verschlusskapsel (1) abtrennbar wird.

8. Vorrichtung nach Anspruch 7, **dadurch gekennzeichnet, dass** die Faltvorrichtung (11) ein ringartiges Element umfasst, das eine konische Aussenfläche aufweist und relativ zum Kapselträger (8) in einer axialen Richtung verfahrbar ist.

9. Vorrichtung nach einem der Ansprüche 7 oder 8, **dadurch gekennzeichnet, dass** die Schneideinrichtung (18) eine bezüglich des Drehturms ortsfeste Messeranordnung umfasst, an welcher der Kapselträger (8) vorbeigeführt wird.

10. Vorrichtung nach einem der Ansprüche 7 bis 9, **dadurch gekennzeichnet, dass** jedem Kapselträger (8) ein Führungselement (12) zugeordnet ist, welches durch Betätigungsmittel während der Schneidoperation in die Verschlusskapsel (1) gefahren und rotiert werden kann, um das Abrollen der Verschlusskapsel (1) zu unterstützen.

11. Vorrichtung nach einem der Ansprüche 7 bis 10, **dadurch gekennzeichnet, dass** ein bezüglich des Drehturms ortsfestes Positioniermittel vorgesehen ist, um die Verschlusskapsel während der Schneidoperation in eine exzentrische Position bezüglich des Kapselträgers zu bringen.

12. Vorrichtung nach Anspruch 10 oder 11, **dadurch gekennzeichnet, dass** als Führungselement ein relativ zu diesem verfahrbares Abstreifelement (13) vorgesehen ist.

13. Vorrichtung nach einem der Ansprüche 7 bis 12, **dadurch gekennzeichnet, dass** zwei Schneideinrichtungen (18) vorgesehen sind, um die Sollbruchlinie (7) in zwei Schritten anzubringen.

14. Vorrichtung nach einem der Ansprüche 7 bis 13, **dadurch gekennzeichnet, dass** eine Kapselzuführung (8) auf einer ersten Ebene und die Faltvorrichtung (11) bzw. die Schneideinrichtung (18) auf einer zweiten bzw. weiteren Ebene angeordnet sind und dass eine Hubeinrichtung vorgesehen ist, um die Verschlusskapsel (1) von der ersten Ebene in die zweite bzw. weitere Ebene zu bringen.
